# EUROPEAN PATENT SPECIFICATION

(11) **EP 2 611 670 B1**
(45) Date of publication and mention of the grant of the patent: **22.04.2020**
(21) Application number: 11820927.9
(22) Date of filing: 01.09.2011
(51) Int. Cl.: B62B 7/06, B62B 9/08

(54) **FOLDING STROLLER IMPROVEMENTS**
VERBESSERUNGEN AN EINEM ZUSAMMENKLAPPBAREN KINDERWAGEN
PERFECTIONNEMENTS APPORTÉS À UNE POUSSETTE PLIANTE

(30) Priority: 29.06.2011 AU 2011902561; 01.09.2010 AU 2010903927
(43) Date of publication of application: 10.07.2013
(73) Proprietor: Britax Childcare Pty Ltd., Sunshine, VIC 3020 (AU)
(72) Inventor: TANG, Weng, Onn, Sunshine Victoria 3020 (AU); LIU, Xiuping, Zhuhai Guangdong (CN)
(74) Representative: Bosch Jehle Patentanwaltsgesellschaft mbH
(86) International application number: PCT/AU2011/001133
(87) International publication number: WO 2012/027795

(56) References cited:
- WO-A1-2011/143797
- GB-A- 2 033 309
- GB-A- 2 033 309
- US-A- 4 614 454
- US-A- 4 614 454
- US-A- 5 288 098
- US-A- 5 288 098
- US-A- 6 102 431
- US-A- 6 102 431
- US-A1- 2004 046 364
- US-A1- 2004 046 364
- US-A1- 2011 148 168
- US-B1- 6 196 571
- US-B1- 6 196 571
- US-B1- 6 302 613
- US-B1- 6 302 613
- US-B1- 6 478 328
- US-B1- 6 478 328
- US-B2- 6 443 479
- US-B2- 6 443 479

## Description

### FIELD OF THE INVENTION

This invention relates to foldable strollers of the type that are foldable between an in use configuration and a folded or collapsed configuration, and to locking and release means for strollers of this type.

### PRIORITY

This patent application claims priority from:
Australian Provisional Patent Application 2010903927, titled "FOLDING STROLLER IMPROVEMENTS", and filed on 1 September 2010; and
Australian Provisional Patent Application 2011902561, titled "FOLDING STROLLER IMPROVEMENTS", and filed on 29 June 2011.

### BACKGROUND OF THE INVENTION

Foldable strollers employ a mechanism that locks them in their in use configuration, the idea being that this prevents any unintended collapse of the stroller. Accordingly, they further include a release for this locking mechanism, so that the stroller can be collapsed when required. These releases generally take the form of a lever, button, handle, pedal or the like, all of which can be activated unintentionally by being bumped for example, resulting in the release of the locking mechanism and the unintended collapse of the stroller. This is a significant safety risk. Document US 6478328 B1 relates to a locking device with a pair of latches on a collapsible stroller, wherein the locking device comprises a housing, a pair of meshed gear members in the housing pivotal in two different opposite directions, a push button engaged with the gear members, and a pair of steel cables coupled to the gear members. By pressing the push button the steel cables are pulled, which unlocks the latches. The stroller further includes a safety mechanism comprising a pawl-like member that engages a gear member, holding it in a locked state until the pawl-like member is disengaged which releases the gear member. Thus, the safety mechanism prevents the latches from being unlocked accidently.

It is an object of the present invention therefore to provide a stroller which ameliorates the above described difficulties, or which at the least is a useful alternative to known strollers.

Other objects and advantages of the present invention will become apparent from the following description, taken in connection with the accompanying drawings, wherein, by way of illustration and example, an embodiment of the present invention is disclosed.

### SUMMARY OF THE INVENTION

In one aspect, the invention may be said to reside in a stroller foldable between an in use configuration and a collapsed configuration, the stroller comprising a locking mechanism for securing the stroller in the in use configuration, a first release for the locking mechanism, and a second release for the locking mechanism, the locking mechanism being configured so that both the first and second release's must be actuated in order for the stroller to be folded from the in use configuration to the collapsed configuration.

In one form, the locking mechanism automatically locks when the stroller reaches its in use configuration.

In one form, the stroller comprises a second locking mechanism, and the second release releases this second locking mechanism.

In one form, the stroller is configured so that the first release can be effected by a first hand of a user, and the second release can be effected by the second hand of the same user.

In one form, the first locking mechanism is a primary locking mechanism, and the second locking mechanism is a secondary locking mechanism.

In one form, the first release is a primary release, and the second release is a secondary release which prevents unintended folding of the stroller via the primary release. In this way the secondary release is akin to 'a safety' of a firearm.

In one form, the secondary locking mechanism is configured so that this can be temporarily retained in a released (or unlocked) state while release of the primary locking mechanism is effected. In other words, the secondary release is bistable.

In one form, the secondary locking mechanism is adapted to automatically re-enter a locking state from the temporary release state.

In one form, in an alternative, the first release is a primary release, and the second release is a secondary release which prevents unintended release of the primary release.

In a further aspect, the invention may be said to reside in a stroller foldable between an in use configuration and a collapsed configuration, the stroller comprising a locking mechanism for securing the stroller in the in use configuration, a primary release for the locking mechanism, and a second release which prevents unintended release of the primary release.

In one form, the locking mechanism forms part of a combined folding and locking mechanism.

In one form, a frame assembly for the foldable stroller comprises a forward support section, a rear support section and a handle section, all of which are combined and connected by a pair of combined folding and locking mechanisms, there being one such mechanism on each side of the stroller frame.

In one form, the combined folding and locking mechanisms synchronise folding of the forward support section, rear support section and handle sections relative to one another.

In one form, the first release comprises an actuator extending between the pair of combined folding and locking mechanisms.

In one form, the first release is effected by pulling the actuator for this upwardly.

In one form, this actuator for the first release cannot be pulled upwardly until the second release is actuated.

In one form, with the second release effected and the actuator for the first release being pulled upwardly, then the stroller collapses on either side of the actuator for the first release, under the effect of its own weight.

A first release of the above described type is referred to as a 'centre pull release'.

In a further aspect, the invention may be said to reside in a stroller foldable between an in use configuration and a collapsed configuration, the stroller comprising
a locking mechanism for securing the stroller in the in use configuration,
a centre pull release for the locking mechanism,
and a second release for the locking mechanism which prevents operation of the centre pull release until this second release has been actuated.

In a further aspect, the invention may be said to reside in a method of folding the above described stroller from an in use configuration into a collapsed configuration, the method including the steps of effecting release of the first and second locking mechanism releases, and then folding the stroller.

In one form, the first release must be released first, followed by the second release. In an alternative, this order is reversed.

In one form, the first and second releases must be released simultaneously.

In one form, operation of the second and/or secondary release is effected in two stages.

According to the invention the second and/or secondary release comprises an actuator movable between a first portion in which the actuator is operable to effect release, and a second position in which the actuator is inoperable.

In one form, the actuator is biased toward the second position in which the actuator is inoperable.

In a further aspect, the invention may be said to reside in a stroller foldable between an in use configuration and a collapsed configuration, the stroller comprising at least two sub-assemblies, and a combined folding and locking mechanism for providing synchronised folding of the sub-assemblies relative to one another and securing the stroller in the in use configuration, a first release for the locking mechanism, and a second release for the locking mechanism, the locking mechanism being configured so that both the first and second releases must be actuated in order for the stroller to be folded from the in use configuration to the collapsed configuration.

In yet a further aspect, the invention may be said to reside in a folding mechanism for use with a foldable device, the folding mechanism comprising a locking mechanism for securing the foldable device in an in use configuration, a first release for the locking mechanism, and a second release for the locking mechanism, the locking mechanism being configured so that both the first and second release must be actuated in order for the foldable device to be folded from the in use configuration to a collapsed configuration.

### DESCRIPTION OF THE DRAWINGS

For a better understanding of this invention it will now be described with respect to one or more exemplary embodiments which shall be described herein with the assistance of drawings, wherein:
Figure 1 is a left hand side view of a stroller frame assembly according to an exemplary embodiment;
Figure 2 is an exploded view of a combined folding and locking mechanism from the left hand side of the stroller frame assembly of Figure 1;
Figure 3 is a detailed outer side view of the combined folding and locking mechanism illustrated in Figure 2;
Figures 4 and 5 are detailed perspective views of the combined folding and locking mechanism illustrated in Figures 2 and 3;
Figure 6 is a detailed perspective view of a first release for the locking mechanism;
Figure 7 is a perspective view of the frame assembly illustrated in Figure 1, in a partially collapsed state;
Figure 8 is a perspective view of the frame assembly illustrated in Figures 1 and 7, in an erected or in use configuration;
Figure 9 is a perspective view of the frame assembly illustrated in Figures 1, 7 and 8. in a fully collapsed state; and
Figure 10 is a detailed inner side view of the combined folding and locking mechanism from the right hand side of the stroller frame assembly of Figure 1;
Figure 11 is a detailed perspective view of a housing for a combined folding and locking mechanism according to a further illustrative embodiment; and
Figures 12 through 14 are detailed cross-sectional views through the locking mechanism of Figure 11, illustrating stages of its operation.

In the following description; like reference characters designate like or corresponding parts throughout the several views of the drawings.

### DESCRIPTION OF THE PREFERRED EMBODIMENT

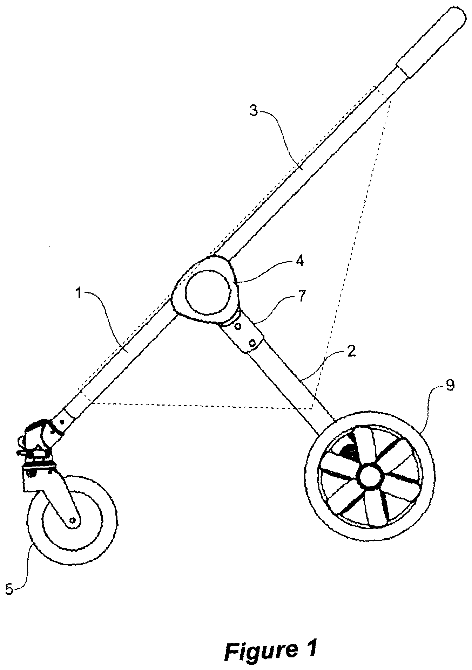

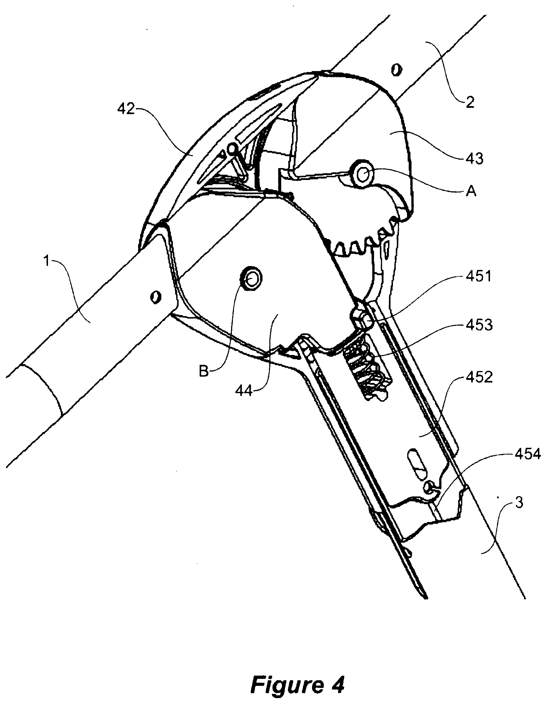

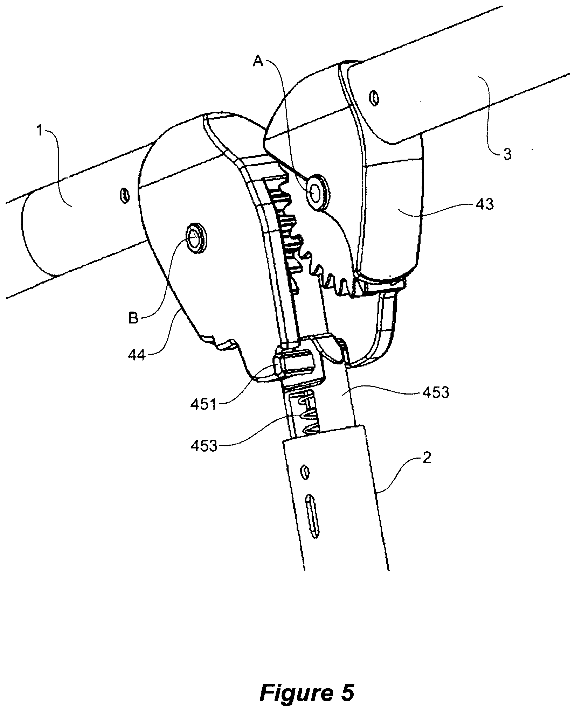

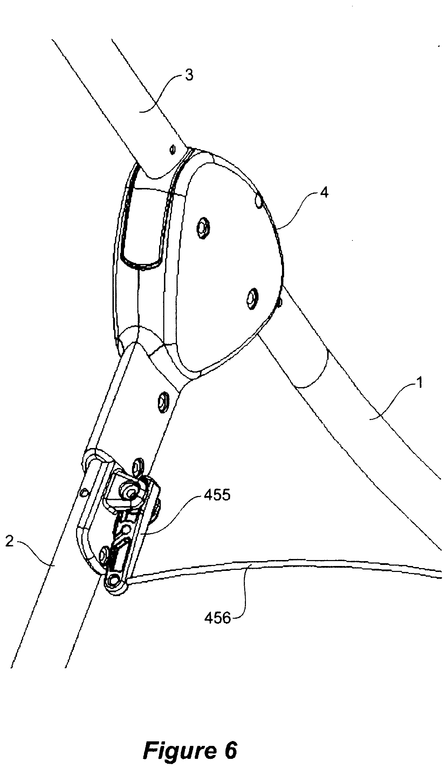

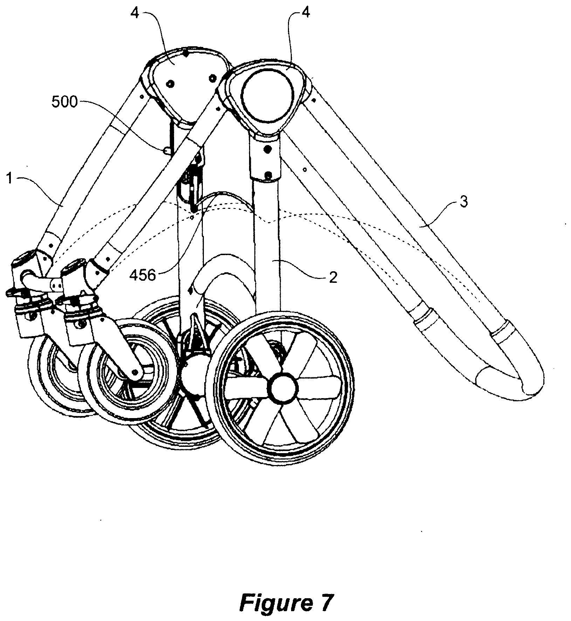

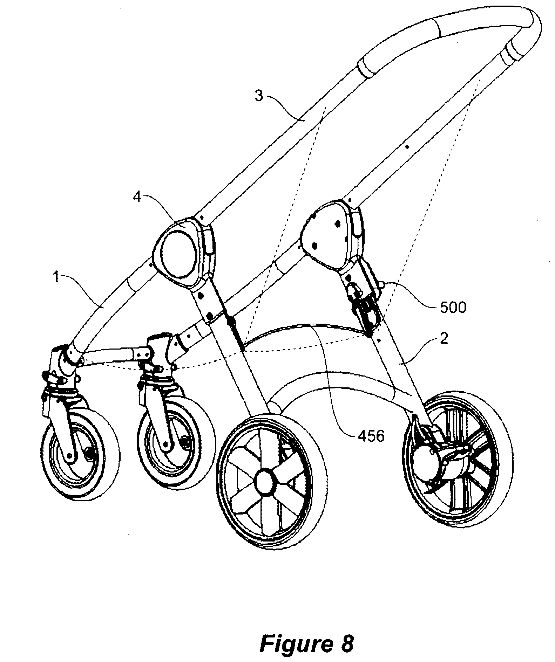

Referring now to Figures 1 through 9. where there is illustrated a frame assembly for a foldable stroller comprising a forward support section 1, a rear support section 2 and a handle section 3, all of which are combined and connected by a pair of combined folding and locking mechanisms. Each combined folding and locking mechanism is housed in its own housing 4, there being one such mechanism in a housing 4 on each of a pair of opposing sides of the stroller frame. In use, the frame assembly will be covered in fabric and padding materials which together form a seat portion and a backrest portion supported by the frame. In order to permit visibility of the frame assembly, the outline of these fabric and padding materials are shown dashed in the accompanying figures.

The forward and rear support sections 1 and 2 both ride upon wheels, and the handle section 3 provides a handle via which the stroller can be controlled.

The forward support section 1 is comprised of a pair of parallel struts of tubular steel (or aluminium) extending from the housing 4 for the combined folding and locking mechanism to a forward wheel assembly comprising a castor wheel 5, and a cross member connected to and extending between the forward wheel assemblies. It will be understood however that the forward support section 1 may be supported by only one centrally positioned wheel assembly.

The rear support section is comprised of a pair of parallel struts 2 of tubular steel extending between a yoke of the housing assembly 4 and a rear wheel support assembly 9.

This rear wheel support assembly 9 comprises a wheel hub incorporating a wheel brake and a wheel which is detachable from the wheel hub.

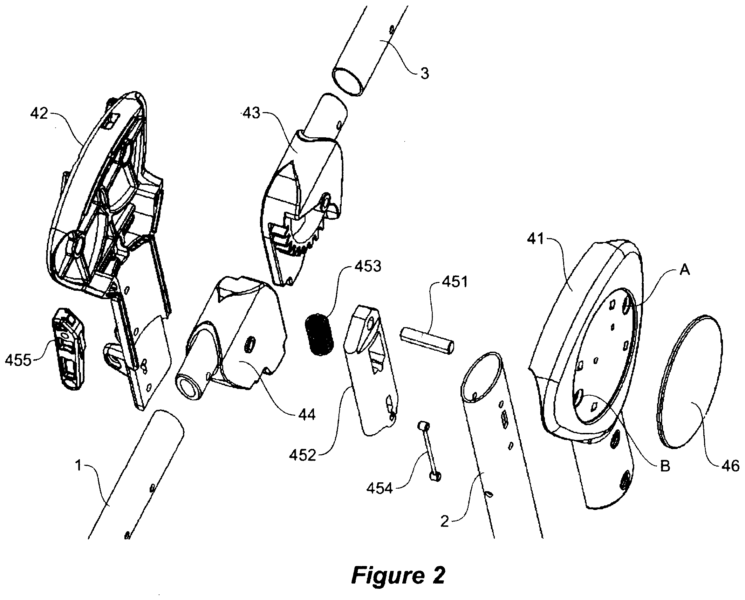

With reference to Figure 2, it can be seen that each housing 4 for the combined folding and locking mechanism is comprised of housing half portions 41 and 42 and a cover cap 46.

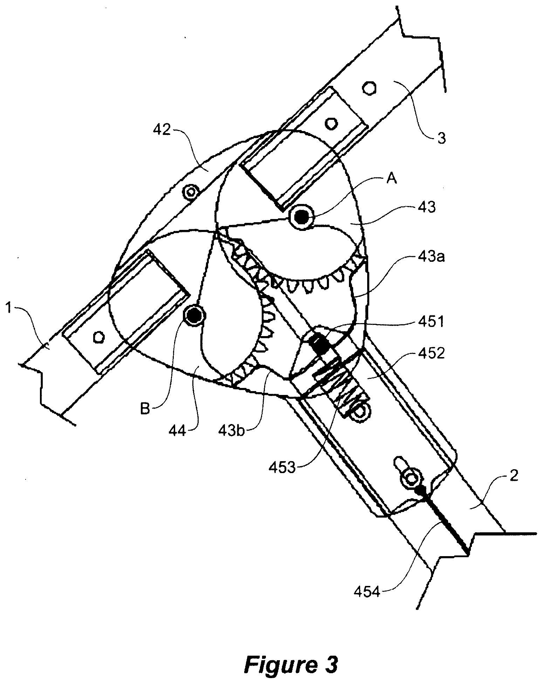

Each combined folding and locking mechanism consists of two meshing partial gears 43 and 44 rotating about axes A and B respectively (see Figure 3) that are defined by the housing portions 41 and 42, where meshing partial gears 44 are fixed to respective ends of the parallel struts of the forward support section 1, and meshing partial gears 43 are fixed to respective ends of the parallel struts of the handle section 3.

An advantage of the meshing partial gears 43 and 44 is that they ensure synchronised folding of the forward 1 and handle 3 sections relative to each other and the rear support section 2. The result of this is smooth and controlled collapse and erection of the stroller.

Referring now to Figures 2 through 5, where it can be seen that a spring loaded piston 452, is slidably mounted in each of the pair of parallel struts of the rear support section 2. The piston 452 is windowed and the spring 453 which biases the piston 452 is positioned in this window and bears against a screw (not illustrated) that extends right through the strut.

A pin 451 extends through a slotted aperture in the piston 452 so as to extend transverse to the piston 452 and outwardly from both sides of this.

Forming part of a primary release for the locking mechanism is a linkage 454 that extends between a lower end of piston 452, down through the struts of rear support section 3 to an upper end of a lever 455 that is pivotably supported on the inner side of each parallel strut of the rear support section 2.

Secured to the side of each of the meshing partial gears 43 and 44 is an outwardly extending follower wing 43a and 43b respectively, a tip of each of which is notched. These follower wings 43a and 43b extend at approximately 90 degrees to the steel tubing of sections 3 and 1 respectively. The notches in the tips of the follower wings 43a and 43b are aligned when the frame assembly reaches its in use configuration, at which point the spring biased piston 452 drives the pin 451 into the aligned notches, locking the stroller frame assembly in the in use configuration (see Figure 3).

In this embodiment, when in use (ie. erected), forward support section 1 forms approximately a 90-degree angle with the rear support section 2, and approximately a 180-degree angle with the handle section 3. The rear support section 2 bisects the angle between the handle section 3 and the forward support section 1.

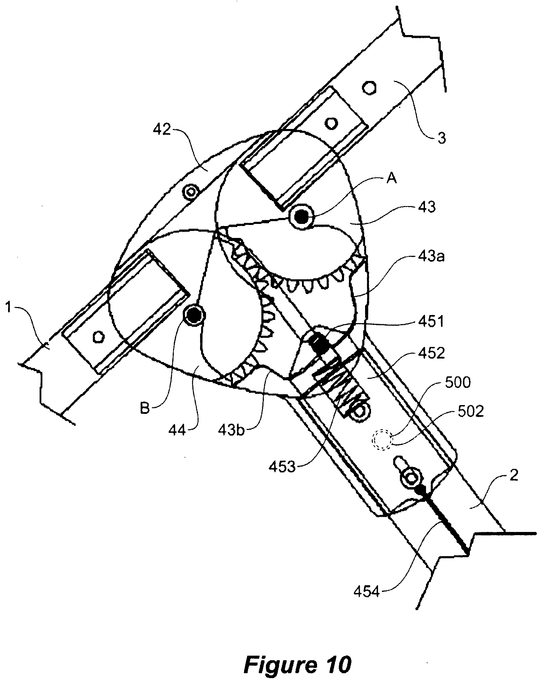

Referring now to Figure 10, where it can be seen how one of the struts (the right hand side strut in the case of the stroller frame illustrated in Figures 1, 7, 8 and 9) is equipped with a second or secondary release for the stroller's locking mechanism. This secondary release comprises a second or locking pin 500, which is slidably located in an aperture through the piston 452 so as to be parallel to pin 451.

When the piston 452 is in its locking position, and thereby preventing rotation of the two meshing partial gears 43 and 44, the locking pin 500 is aligned with a pair of aligning apertures passing through both the outer side of the right hand strut of rear support section 2 and the yoke of the housing assembly 4, respectively.

This locking pin 500 is biased in an outward direction by a spring 502, so that when the piston 452 is in its locking position, a free end of the locking pin 500 is forced to extend through and proud of the aligning apertures in the right hand strut and the yoke of the housing assembly 4. With the locking pin 500 so engaged, the piston 452 cannot be withdrawn from its locking position, and the stroller frame assembly cannot be folded from its in use configuration to its collapsed configuration. To collapse the stroller, the locking pin 500 must be pushed into the strut and out of its engagement with the right hand strut and the yoke of the housing assembly 4. In this way the secondary or safety release prevents operation of the primary release until this is disengaged.

The locking pin 500 mechanism may be configured so that the locking pin 500 can be temporarily retained (such as by a detent) in its disengaged or released position (i.e. this locking pin 500 mechanism is a bistable arrangement) without need for the stroller user to maintain direct pressure on this secondary or safety release while operating the primary release. The locking pin 500 would then be automatically released from this temporary retention in the disengaged position when the stroller reached its collapsed configuration, and certainly prior to its folding to the in use configuration.

To effect the primary release, the stroller is lifted by a cross-piece 456 (which may be rigid or flexible like a strap) stitched into the fabric of the stroller so as to be located in the vicinity of the region where the seat portion of the stroller meets the back portion thereof (ie. it forms a 'centre-pull' arrangement). Cross-piece 456 is connected on either end to a lowermost end of lever 455, which rocks about its pivot point to pull linkage 454 and piston 452 downward against the bias of spring 453.

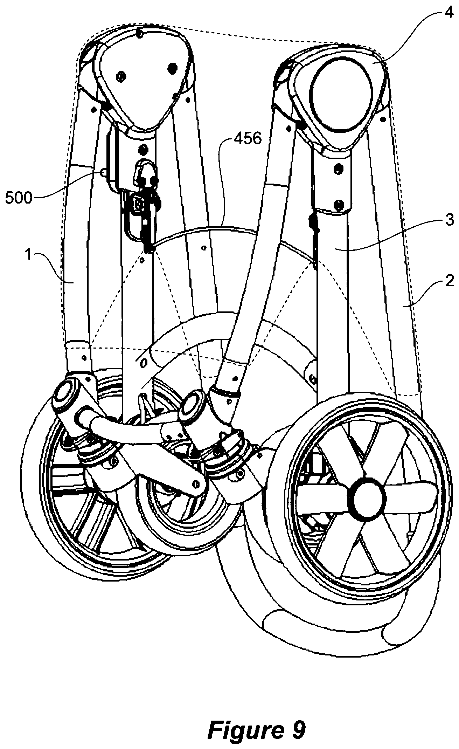

With the depression of the spring loaded piston 452, the rotation of the gears relative to one another is no longer constrained, so continuing to hold the cross-piece 456 causes the stroller to collapse under its own weight; so that all of the frame sections 1, 2 and 3 rotate into positions approximately parallel to one another, as illustrated in Figure 9.

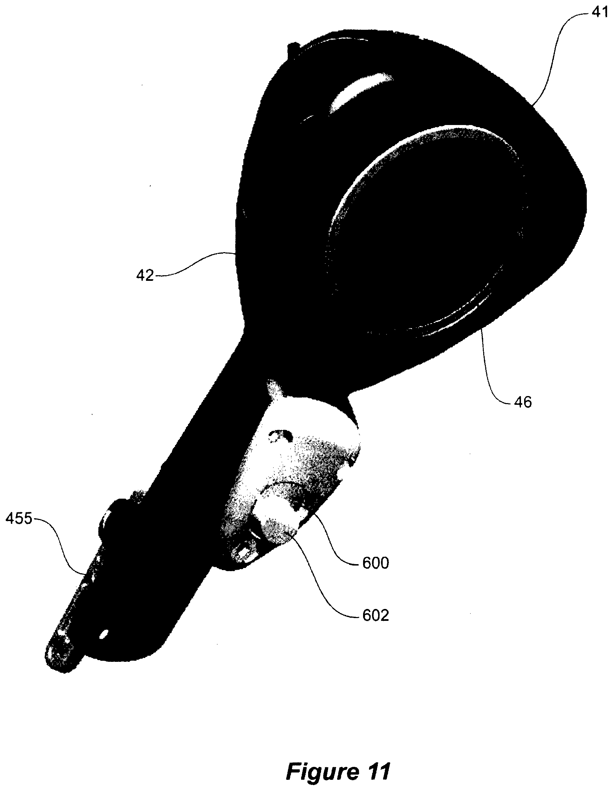

Referring now to Figures 11 through 14, where secured to the end of the locking pin 500 is a release button 550 which moves with the pin 500 as this engages and disengages piston 452. The release button 550 is in turn covered by a shutter 600 comprising a raised, button shaped portion 602 at one end, and a cylindrical form 606 located in a bore 608 with a sliding fit at an opposing end. In use, this cylindrical form 606 provides a pivot point for the shutter 600 which can slide along the bore 608.

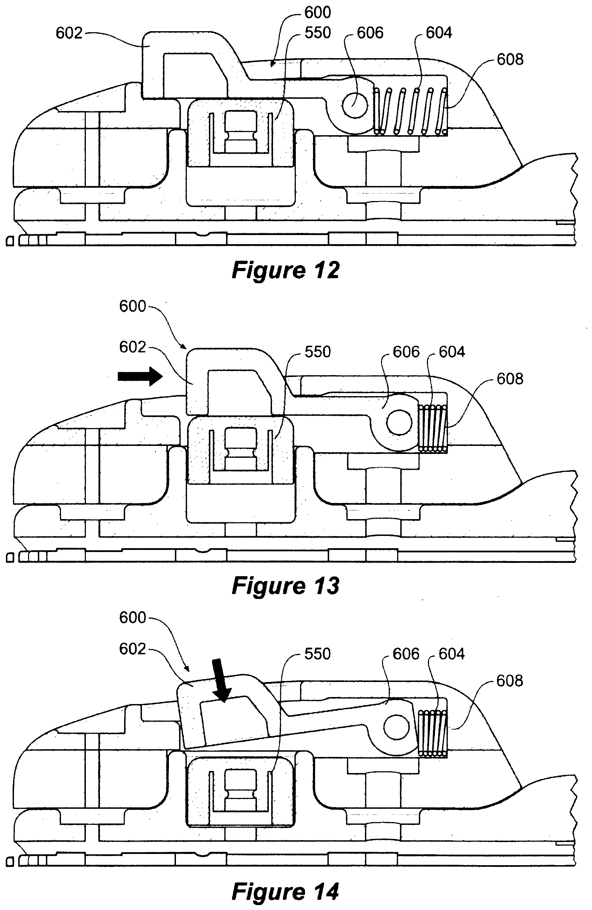

The shutter 600 is slidable between first and second positions, and is biased by a spring 604 acting on the cylindrical end form 606 toward the first position. In the second position (see Figures 13 and 14) the button shaped portion 602 of the shutter 600 is aligned with the release button 550, and the act of depressing the button shaped portion 602 drives the release button 550 and locking pin 500 effecting operation of the secondary release.

In the first position, the button shaped portion 602 of the shutter 600 is misaligned with respect to the release button 550 (see Figures 11 and 12) and the shutter 600 is supported to either side of the release button 550, meaning the button shaped portion 602, and release button 550 in turn cannot be depressed, thereby preventing unintended operation of the secondary release and folding of the stroller.

When the stroller is to be folded, a thumb or finger can be used to push against the side of the button shaped portion 602 of the shutter 600 to slide this from the first position to the second position against the bias of the spring 604, the button shaped portion 602 can then be depressed, effecting operation of the secondary release, where this secondary release is effected in two stages With operation of the primary release the stroller can be folded.

The above described arrangement acts as a 'safety' to prevent inadvertent operation of the secondary release.

An advantage of the stroller discussed herein is that unintended folding of the stroller frame from its in use configuration to its folded configuration is prevented. Without such safety measures, unintended collapse of centre-pull type strollers in particular, can occur.

It will be understood that the term "comprise" and any of its derivatives (e.g. comprises, comprising) as used in this specification is to be taken to be inclusive of features to which it refers, and is not meant to exclude the presence of any additional features unless otherwise stated or implied.

Any discussion of documents, acts, materials, devices, articles or the like which has been included in the present specification is solely for the purpose of providing a context for the present invention. It is not to be taken as an admission that any or all of these matters form part of the prior art base or were common general knowledge in the field relevant to the present invention as it existed in Australia or elsewhere before the priority date of each claim of this application.

Although the disclosure has been herein shown and described in what is conceived to be the most practical and preferred embodiment, it is recognised that departures can be made within the scope of the invention, which is not to be limited to the details described herein but is to be accorded the full scope of the appended claims.

## Claims

1. A stroller foldable between an in use configuration and a collapsed configuration, the stroller comprising a locking mechanism (43a, 43b, 451, 452, 453) for securing the stroller in the in use configuration, a first release (454, 455, 456) for the locking mechanism (43a, 43b , 451, 452, 453), and a second release (550, 600, 602, 604, 606, 608) for the locking mechanism (43a, 43b , 451, 452, 453), wherein both the first release (454, 455, 456) and the second release (550, 600, 602, 604, 606, 608) must be actuated in order for the stroller to be folded from the in use configuration to the collapsed configuration, **characterised in that** the second release (550, 600, 602, 604, 606, 608) comprises an actuator (600) movable between a first position in which the actuator (600) is operable to effect release, and a second position in which the actuator (600) is inoperable.

2. The stroller as in claim 1, wherein when the stroller reaches its in use configuration, the locking mechanism (43a, 43b, 451, 452, 453) automatically secures it in this configuration.

3. The stroller as in either of the preceding claims, wherein the first release (454, 455, 456) is a primary release, and the second release (550, 600, 602, 604, 606, 608) is a secondary release which prevents unintended actuation of the primary release.

4. The stroller as in either of claims 1 or 2, wherein the stroller comprises a second locking mechanism (500, 502), and the second release (550, 600, 602, 604, 606, 608) releases the second locking (500, 502) mechanism.

5. The stroller as in claim 4, wherein the first locking mechanism (43a, 43b, 451, 452, 453) is a primary locking mechanism (43a, 43b , 451, 452, 453), and the second locking mechanism (500, 502) is a secondary locking mechanism.

6. The stroller as in either of claims 4 or 5, wherein the secondary locking mechanism is configured so that this can be temporarily retained in a released state while release of the primary locking mechanism is effected.

7. The stroller of claim 6, wherein the secondary locking mechanism is adapted to automatically re-enter a locking state from its temporary release state.

8. The stroller as in any one of the preceding claims, wherein the or each locking mechanism forms part of a combined folding and locking mechanism (43, 44, 43a, 43b, 451, 452, 453).

9. The stroller of claim 8, wherein the stroller further comprises at least two sub-assemblies, and the combined folding and locking mechanism (43, 44, 43a, 43b, 451, 452, 453) provides synchronised folding of the sub-assemblies relative to one another and securement of the stroller in the in use configuration.

10. The stroller of claim 9, wherein the stroller comprises a frame assembly comprising a forward support section (1), a rear support section (2) and a handle section (3), all of which are combined and connected by a pair of combined folding and locking mechanisms (43, 44, 43a, 43b, 451, 452, 453), there being one such mechanism on each of a pair of sides of the stroller frame.

11. The stroller of claim 10, wherein the combined folding and locking mechanisms (43, 44, 43a, 43b, 451, 452, 453) synchronise folding of the forward support section (1), rear support section (2) and handle section (3) relative to one another.

12. The stroller of claim 11, wherein in the in use configuration, the forward support section (1) forms approximately a 90-degree angle with the rear support section (2), and approximately a 180-degree angle with the handle section (3), and the rear support section (2) bisects the angle between the handle section (3) and the forward support section (1).

13. The stroller as in either of claims 11 or 12, wherein when folded, the three sections (1, 2, 3) are approximately parallel to each other.

14. The stroller as in any one of claims 10 through 13, wherein the first release (454, 455, 456) comprises an actuator (600) extending between the pair of combined folding and locking mechanisms (43, 44, 43a, 43b, 451, 452, 453).

15. The stroller of claim 14, wherein the first release (454, 455, 456) is effected by pulling the actuator (600) for this upwardly.

16. The stroller of claim 15, wherein the actuator (600) for the first release (454, 455, 456) cannot be pulled upwardly until the second release (550, 600, 602, 604, 606, 608) is actuated.

17. The stroller as in any one of claims 14 through 16, wherein in use, with the second release (550, 600, 602, 604, 606, 608) effected and the actuator (600) for the first release (454, 455, 456) being pulled upwardly, then the stroller collapses on either side of the actuator (600) for the first release (454, 455, 456), under the effect of its own weight.

18. The stroller as in any one of the preceding claims, wherein operation of the second and/or secondary release is effected in two stages.

19. The stroller of claim 1, where the actuator (600) is biased toward the second position in which the actuator (600) is inoperable.

20. A method of folding the stroller of any one of the preceding claims from an in use configuration into a collapsed configuration, the method including the steps of effecting release of the first and second locking mechanism (500, 502) releases, and then folding the stroller.

## Patentansprüche

1. Kinderwagen, der zwischen einer Gebrauchskonfiguration und einer zusammengelegten Konfiguration zusammenlegbar ist, wobei der Kinderwagen einen Verriegelungsmechanismus (43a, 43b, 451, 452, 453) zum Sichern des Kinderwagens in der Gebrauchskonfiguration aufweist, eine erste Entriegelung (454, 455, 456) für den Verriegelungsmechanismus (43a, 43b, 451, 452, 453) und eine zweite Entriegelung (550, 600, 602, 604, 606, 608) für den Verriegelungsmechanismus (43a, 43b, 451, 452, 453), wobei sowohl die erste Entriegelung (454, 455, 456) als auch die zweite Entriegelung (550, 600, 602, 604, 606, 608) betätigt werden müssen, damit der Kinderwagen von der Gebrauchskonfiguration in die zusammengelegte Konfiguration zusammengelegt wird,
**dadurch gekennzeichnet, dass**
die zweite Entriegelung (550, 600, 602, 604, 606, 608) einen Aktor (600) aufweist, der zwischen einer ersten Position, in der der Aktor (600) dazu betreibbar ist, ein Entriegeln zu bewirken, und einer zweiten Position, in der der Aktor (600) nicht betriebsbereit ist, bewegbar ist.

2. Kinderwagen nach Anspruch 1, wobei, wenn der Kinderwagen seine Gebrauchskonfiguration erreicht, der Verriegelungsmechanismus (43a, 43b, 451, 452, 453) ihn automatisch in dieser Konfiguration sichert.

3. Kinderwagen nach einem der vorhergehenden Ansprüche, wobei die erste Entriegelung (454, 455, 456) eine primäre Entriegelung ist und die zweite Entriegelung (550, 600, 602, 604, 606, 608) eine sekundäre Entriegelung ist, die eine versehentliche Betätigung der primären Entriegelung verhindert.

4. Kinderwagen nach einem der Ansprüche 1 oder 2, wobei der Kinderwagen einen zweiten Verriegelungsmechanismus (500, 502) aufweist und die zweite Entriegelung (550, 600, 602, 604, 606, 608) den zweiten Verriegelungsmechanismus (500, 502) entriegelt.

5. Kinderwagen nach Anspruch 4, wobei der erste Verriegelungsmechanismus (43a, 43b, 451, 452, 453) ein primärer Verriegelungsmechanismus (43a, 43b, 451, 452, 453) ist und der zweite Verriegelungsmechanismus (500, 502) ein sekundärer Verriegelungsmechanismus ist.

6. Kinderwagen nach einem der Ansprüche 4 oder 5, wobei der sekundäre Verriegelungsmechanismus so konfiguriert ist, dass er temporär in einem entriegelten Zustand gehalten werden kann, während die Entriegelung des primären Verriegelungsmechanismus durchgeführt wird.

7. Kinderwagen nach Anspruch 6, wobei der sekundäre Verriegelungsmechanismus dazu ausgelegt ist, aus dem temporären Entriegelungszustand automatisch wieder in einen Verriegelungszustand einzutreten.

8. Kinderwagen nach einem der vorhergehenden Ansprüche, wobei der oder jeder Verriegelungsmechanismus Teil eines kombinierten Zusammenlege- und Verriegelungsmechanismus (43, 44, 43a, 43b, 451, 452, 453) bildet.

9. Kinderwagen nach Anspruch 8, wobei der Kinderwagen des Weiteren wenigstens zwei Unteranordnungen aufweist und der kombinierte Zusammenlege- und Verriegelungsmechanismus (43, 44, 43a, 43b, 451, 452, 453) synchronisiertes Zusammenlegen der Unteranordnungen in Bezug zueinander und Sichern des Kinderwagens in der Gebrauchskonfiguration bereitstellt.

10. Kinderwagen nach Anspruch 9, wobei der Kinderwagen eine Rahmenanordnung aufweist, die einen vorderen Halteabschnitt (1), einen hinteren Halteabschnitt (2) und einen Griffabschnitt (3) aufweist, die miteinander kombiniert und durch ein Paar kombinierter Zusammenlege- und Verriegelungsmechanismen (43, 44, 43a, 43b, 451, 452, 453) verbunden sind, wobei auf jeder eines Paars von Seiten des Kinderwagenrahmens ein solcher Mechanismus vorhanden ist.

11. Kinderwagen nach Anspruch 10, wobei die kombinierten Zusammenlege- und Verriegelungsmechanismen (43, 44, 43a, 43b, 451, 452, 453) das Zusammenlegen des vorderen Halteabschnitts (1), des hinteren Halteabschnitts (2) und des Griffabschnitts (3) in Bezug zueinander synchronisieren.

12. Kinderwagen nach Anspruch 11, wobei in der Gebrauchskonfiguration der vordere Halteabschnitt (1) in etwa einen 90-Grad-Winkel mit dem hinteren Halteabschnitt (2) bildet, und in etwa einen 180-Grad-Winkel mit dem Griffabschnitt (3), und der hintere Halteabschnitt (2) den Winkel zwischen dem Griffabschnitt (3) und dem vorderen Halteabschnitt (1) schneidet.

13. Kinderwagen nach einem der Ansprüche 11 oder 12, wobei die drei Abschnitte (1, 2, 3), wenn sie zusammengelegt sind, in etwa parallel zueinander sind.

14. Kinderwagen nach einem der Ansprüche 10 bis 13, wobei die erste Entriegelung (454, 455, 456) einen Aktor (600) aufweist, der sich zwischen dem Paar kombinierter Zusammenlege- und Verriegelungsmechanismen (43, 44, 43a, 43b, 451, 452, 453) erstreckt.

15. Kinderwagen nach Anspruch 14, wobei die erste Entriegelung (454, 455, 456) durch Ziehen des betreffenden Aktors (600) nach oben durchgeführt wird.

16. Kinderwagen nach Anspruch 15, wobei der Aktor (600) für die erste Entriegelung (454, 455, 456) erst nach oben gezogen werden kann, wenn die zweite Entriegelung (550, 600, 602, 604, 606, 608) betätigt wird.

17. Kinderwagen nach einem der Ansprüche 14 bis 16, wobei im Gebrauch, mit durchgeführter zweiter Entriegelung (550, 600, 602, 604, 606, 608) und dem Aktor (600) für die erste Entriegelung (454, 455, 456) nach oben gezogen, der Kinderwagen sich auf jeder Seite des Aktors (600) für die erste Entriegelung (454, 455, 456) unter Wirkung seines Eigengewichts zusammenlegt.

18. Kinderwagen nach einem der vorhergehenden Ansprüche, wobei der Betrieb der zweiten und/oder sekundären Entriegelung in zwei Stufen erfolgt.

19. Kinderwagen nach Anspruch 1, wobei der Aktor (600) in die zweite Position, in der der Aktor (600) nicht betriebsbereit ist, vorgespannt ist.

20. Verfahren zum Zusammenlegen des Kinderwagens nach einem der vorhergehenden Ansprüche von einer Gebrauchskonfiguration in eine zusammengelegte Konfiguration, wobei das Verfahren die Schritte des Durchführens der Entriegelung der ersten und zweiten Verriegelungsmechanismen (500, 502) und dann des Zusammenlegens des Kinderwagens aufweist.

## Revendications

1. Poussette pliable entre une configuration d'utilisation et une configuration repliée, la poussette comprenant un mécanisme de verrouillage (43a, 43b, 451, 452, 453) pour fixer la poussette dans la configuration d'utilisation, un premier mécanisme de libération (454, 455, 456) pour le mécanisme de verrouillage (43a, 43b, 451, 452, 453) et un deuxième mécanisme de libération (550, 600, 602, 604, 606, 608) pour le mécanisme de verrouillage (43a, 43b, 451, 452, 453), dans lequel à la fois le premier mécanisme de libération (454, 455, 456) et le deuxième mécanisme de libération (550, 600, 602, 604, 606, 608) doivent être actionnés pour que la poussette soit pliée de la configuration d'utilisation à la configuration repliée, **caractérisée en ce que** le deuxième mécanisme de libération (550, 600, 602, 604, 606, 608) comprend un actionneur (600) mobile entre une première position dans laquelle l'actionneur (600) peut être actionné pour effectuer la libération, et une deuxième position dans laquelle l'actionneur (600) ne fonctionne pas.

2. Poussette selon la revendication 1, dans laquelle lorsque la poussette atteint sa configuration d'utilisation, le mécanisme de verrouillage (43a, 43b, 451, 452, 453) la fixe automatiquement dans cette configuration.

3. Poussette selon l'une ou l'autre des revendications précédentes, dans laquelle le premier mécanisme de libération (454, 455, 456) est un mécanisme de libération principal, et le deuxième mécanisme de libération (550, 600, 602, 604, 606, 608) est un mécanisme de libération secondaire qui empêche l'actionnement involontaire du mécanisme de libération principal.

4. Poussette selon l'une ou l'autre des revendications 1 ou 2, dans laquelle la poussette comprend un deuxième mécanisme de verrouillage (500, 502), et le deuxième mécanisme de libération (550, 600, 602, 604, 606, 608) libère le deuxième mécanisme de verrouillage (500, 502).

5. Poussette selon la revendication 4, dans laquelle le premier mécanisme de verrouillage (43a, 43b, 451, 452, 453) est un mécanisme de verrouillage principal (43a, 43b, 451, 452, 453), et le deuxième mécanisme de verrouillage (500, 502) est un mécanisme de verrouillage secondaire.

6. Poussette selon l'une ou l'autre des revendications 4 ou 5, dans laquelle le mécanisme de verrouillage secondaire est configuré de manière à ce qu'il puisse être temporairement maintenu dans un état libéré pendant que la libération du mécanisme de verrouillage principal est effectuée.

7. Poussette selon la revendication 6, dans laquelle le mécanisme de verrouillage secondaire est adapté pour rentrer automatiquement dans un état de verrouillage à partir de son état de libération temporaire.

8. Poussette selon l'une quelconque des revendications précédentes, dans laquelle le ou chaque mécanisme de verrouillage fait partie d'un mécanisme combiné de pliage et de verrouillage (43, 44, 43a, 43b, 451, 452, 453).

9. Poussette selon la revendication 8, dans laquelle la poussette comprend en outre au moins deux sous-ensembles, et le mécanisme combiné de pliage et de verrouillage (43, 44, 43a, 43b, 451, 452, 453) assure un pliage synchronisé des sous-ensembles les uns par rapport aux autres et une fixation de la poussette dans la configuration d'utilisation.

10. Poussette selon la revendication 9, dans laquelle la poussette comprend un ensemble cadre comprenant une section de support avant (1), une section de support arrière (2) et une section de poignée (3), qui sont toutes combinées et reliées par une paire de mécanismes combinés de pliage et de verrouillage (43, 44, 43a, 43b, 451, 452, 453), un tel mécanisme étant présent sur chacun des deux côtés du cadre de poussette.

11. Poussette selon la revendication 10, dans laquelle les mécanismes combinés de pliage et de verrouillage (43, 44, 43a, 43b, 451, 452, 453) synchronisent le pliage de la section de support avant (1), de la section de support arrière (2) et de la section de poignée (3) les unes par rapport aux autres.

12. Poussette selon la revendication 11, dans laquelle, dans la configuration d'utilisation, la section de support avant (1) forme approximativement un angle de 90 degrés avec la section de support arrière (2), et approximativement un angle de 180 degrés avec la section de poignée (3), et la section de support arrière (2) coupe en deux l'angle entre la section de poignée (3) et la section de support avant (1).

13. Poussette selon l'une ou l'autre des revendications 11 ou 12, dans laquelle lorsqu'elles sont pliées, les trois sections (1, 2, 3) sont approximativement parallèles entre elles.

14. Poussette selon l'une quelconque des revendications 10 à 13, dans laquelle le premier mécanisme de libération (454, 455, 456) comprend un actionneur (600) s'étendant entre la paire de mécanismes combinés de pliage et de verrouillage (43, 44, 43a, 43b, 451, 452, 453).

15. Poussette selon la revendication 14, dans laquelle le premier mécanisme de libération (454, 455, 456) est mis en œuvre en tirant l'actionneur (600) pour cela vers le haut.

16. Poussette selon la revendication 15, dans laquelle l'actionneur (600) pour le premier mécanisme de libération (454, 455, 456) ne peut pas être tiré vers le haut jusqu'à ce que le deuxième mécanisme de libération (550, 600, 602, 604, 606, 608) soit actionné.

17. Poussette selon l'une quelconque des revendications 14 à 16, dans laquelle en cours d'utilisation, avec le deuxième mécanisme de libération (550, 600, 602, 604, 606, 608) mis en œuvre et l'actionneur (600) pour le premier mécanisme de libération (454, 455, 456) étant tiré vers le haut, la poussette se replie de part et d'autre de l'actionneur (600) pour le premier mécanisme de libération (454, 455, 456), sous l'effet de son propre poids.

18. Poussette selon l'une quelconque des revendications précédentes, dans laquelle le fonctionnement du deuxième mécanisme de libération et/ou du mécanisme de libération secondaire est effectué en deux étapes.

19. Poussette selon la revendication 1, dans laquelle l'actionneur (600) est sollicité vers la deuxième position dans laquelle l'actionneur (600) ne fonctionne pas.

20. Procédé de pliage de la poussette selon l'une quelconque des revendications précédentes d'une configuration d'utilisation à une configuration repliée, le procédé comprenant les étapes consistant à effectuer une libération des mécanismes de libération du premier et du deuxième mécanisme de verrouillage (500, 502), puis à plier la poussette.
